Europäisches Patentamt

European Patent Office

Office européen des brevets

(19)

(11) EP 0 902 898 B1

(12) **FASCICULE DE BREVET EUROPEEN**

(45) Date de publication et mention
de la délivrance du brevet:
**16.08.2001 Bulletin 2001/33**

(51) Int Cl.⁷: **G01S 1/02**

(86) Numéro de dépôt international:
**PCT/FR97/00967**

(21) Numéro de dépôt: **97926083.3**

(22) Date de dépôt: **03.06.1997**

(87) Numéro de publication internationale:
**WO 97/47984 (18.12.1997 Gazette 1997/54)**

(54) **RECEPTEUR DE SIGNAUX DE SATELLITES AVEC CONTROLE D'INTEGRITE ET EXCLUSION D'AXES DEFECTUEUX**

SATELLITENEMPFÄNGER MIT PRÜFUNG DER INTEGRITÄT MITTELS BERECHNUNG DER GESCHWINDIGKEIT

SATELLITE SIGNAL RECEIVER WITH INTEGRITY CONTROL AND EXCLUSION OF DEFECTIVE AXES

(84) Etats contractants désignés:
**DE FR IT**

(30) Priorité: **07.06.1996 FR 9607073**

(43) Date de publication de la demande:
**24.03.1999 Bulletin 1999/12**

(73) Titulaire: **THALES AVIONICS S.A.**
**78141 Vélizy Villacoublay Cédex (FR)**

(72) Inventeur: **ARETHENS, Jean-Pierre,**
**Thomson-CSF S.C.P.I.**
**F-94117 Arcueil Cedex (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
**US-A- 5 436 632          US-A- 5 504 492**

- **500 YEARS AFTER COLUMBUS - NAVIGATION CHALLENGES OF TOMORROW, MONTEREY, CA., MAR. 23 - 27, 1992, no. -, 1 Janvier 1992, INSTITUTE OF ELECTRICAL AND ELECTRONICS ENGINEERS, pages 464-472, XP000344339 LEE Y C: "RECEIVER AUTONOMOUS INTEGRITY MONITORING (RAIM) CAPABILTY FOR SOLE-MEANS GPS NAVIGATION IN THE OCEANIC PHASE OF FLIGHT"**

**Description**

L'invention concerne les récepteurs de positionnement par satellite tels que les récepteurs GPS (Global Positionning System).

Le système GPS utilise une constellation de satellites qui tournent autour de la terre sur des orbites très précisément déterminées, c'est-à-dire qu'on peut connaître à tout instant la position d'un satellite quelconque. Les satellites émettent des signaux radiofréquence contenant des données de navigation et des codes qui permettent d'identifier chaque satellite. Ces codes modulent en phase une fréquence porteuse. Un récepteur GPS, au sol ou sur un véhicule terrestre, aérien ou maritime, peut recevoir les signaux de plusieurs satellites simultanément, calculer précisément sa distance à chacun des satellites, et en déduire sa position précise en latitude, longitude, et altitude, dans un repère terrestre. Il peut en déduire aussi la date et l'heure précise de la réception dans le repère temporel du système GPS. Il peut enfin en déduire, par des mesures doppler, son propre vecteur vitesse dans le repère terrestre (cas d'un récepteur monté sur un véhicule mobile).

Dans le système GPS, chaque satellite est identifié par un code pseudo-aléatoire qui lui est propre et qui module de manière répétitive (toutes les millisecondes par exemple) une fréquence porteuse émise par le satellite. Il existe des systèmes voisins du GPS, notamment le système GLONASS, dans lequel ce code pseudo-aléatoire existe également bien qu'il ne serve pas à identifier un satellite individuel. L'invention qui va être décrite est applicable directement au système GLONASS mais pour plus de simplicité on ne se référera dans la suite qu'au système GPS, et plus précisément à la partie "civile" du système GPS, lequel comporte aussi une partie militaire à laquelle l'invention est également applicable.

Le code pseudo-aléatoire est un code long (1023 bits à 1,023 MHz, soit 1 milliseconde), et une de ses fonctions principales est de permettre l'extraction du signal du satellite dans un niveau de bruit beaucoup plus élevé (30 dB par exemple) que le niveau du signal. Cette technique est maintenant bien connue sous le nom d'émission à étalement de spectre. Le signal est extrait du bruit grâce à une opération de corrélation, dans le récepteur, entre le signal reçu et un code pseudo-aléatoire périodique qui est identique à celui que l'on s'attend à trouver dans le signal. Si les codes ne coïncident pas temporellement, il n'y a aucune corrélation entre les signaux reçus et le code local engendré par un générateur de code local; s'ils coïncident presque, il y a une certaine corrélation, l'énergie de corrélation étant d'autant plus forte que la coïncidence est plus exacte. On peut donc établir un signal de corrélation permettant d'asservir un générateur de code local jusqu'à obtenir une coïncidence exacte du code local et du code modulant le signal émis par le satellite. Une boucle d'asservissement de code permet ensuite de maintenir cette coïncidence.

Le code pseudo-aléatoire est émis par le satellite à des instants extrêmement précis et connus au niveau du récepteur. On se sert de l'opération de corrélation pour déterminer l'instant d'arrivée de ce code dans le récepteur : on détermine l'instant caractéristique ou époque d'émission du code local, et comme ce code local coïncide avec le code reçu lorsque la corrélation maximale est établie, cet instant représente l'instant d'arrivée du code reçu. La différence entre un instant d'émission du code par le satellite et un instant de réception du code par le récepteur permet de déterminer un temps de parcours des signaux entre le satellite et le récepteur. Sachant que la vitesse de parcours des signaux est la vitesse de la lumière, on peut calculer la distance entre le récepteur et un satellite donné. La même opération faite sur deux autres satellites permet, par triangulation, de déterminer la position exacte du récepteur par rapport aux trois satellites.

En utilisant un quatrième satellite, on élimine les erreurs d'horloge du récepteur, l'horloge du récepteur n'étant pas aussi précise que celle des satellites. Outre la position du récepteur on peut alors calculer un temps précis de la mesure de position, dans le repère de temps des satellites GPS.

La position de chacun des satellites est connue à tout instant : elle est calculée à partir de tables stockées dans le récepteur et remises à jour par le message de navigation diffusé par les satellites. La vitesse des satellites à tout instant est également calculable à partir de ces tables.

On peut déduire, à partir des signaux envoyés par quatre satellites, le temps et la position du récepteur par rapport aux quatre satellites. Et, par changement de coordonnées on obtient la position du récepteur dans un repère terrestre fixe puisqu'on connaît la position des satellites à tout moment. Il en est de même pour la vitesse.

Mais si l'on utilise plus de quatre satellites on obtient une information redondante. C'est le cas dans les récepteurs de qualité professionnelle utilisés par exemple en aéronautique.

Si l'utilisation de toutes les informations redondantes aboutissait exactement à un même résultat de calcul de position ou de vitesse, on pourrait se contenter de prendre quatre satellites quelconques parmi les satellites de la constellation observée à un moment donné.

Mais des imprécisions diverses affectent les mesures, de sorte que la redondance n'est pas parfaite. De plus, un satellite peut fonctionner de manière défectueuse à un moment donné et fournir alors des informations aberrantes polluant la détermination de position et de vitesse.

C'est pourquoi on a imaginé des systèmes permettant de déterminer l'intégrité de mesure de la position, c'est-à-dire de contrôler la concordance plus ou moins bonne des mesures effectuées sur tous les satellites. Si la concordance n'est pas bonne, c'est-à-dire si les mesures effectuées avec n satellites ne se projettent pas correctement toutes sur un seul point dans le repère terrestre, on a également proposé de rechercher s'il y a un satellite particulier qui fausse la mesure et on a proposé de cesser de prendre en compte ce satellite tant qu'il perturbe la mesure.

Une manière de mesurer la divergence entre les mesures fournies par n satellites consiste à calculer, par une méthode des moindres carrés, une "distance" dans un espace à n dimensions, entre d'une part les mesures individuelles fournies à partir de chaque satellite, et d'autre part un point moyen de l'espace terrestre à quatre dimensions (espace et temps) représentant la position la plus probable du récepteur compte tenu des n mesures. On peut faire également cette recherche pour une mesure de vitesse du récepteur.

L'écart-type entre ces différentes distances constitue une valeur estimée de divergence entre les mesures, et cette valeur estimée peut être comparée à un seuil : si elle est excessive, on peut considérer que la mesure est entachée d'un défaut. Il peut être alors souhaitable de rechercher et d'éliminer le ou les satellites qui donnent lieu le plus probablement à ce défaut. Un tel système est connu du brevet US-A-5 436 632.

Pour cela, on peut rechercher, en comparant les n "distances" entre une mesure individuelle et le point moyen trouvé, quelle est la distance la plus grande et quel est donc le satellite qui est le plus susceptible de donner lieu au défaut de mesure. Ce satellite peut alors être éliminé, ce qui veut dire qu'il faut alors fournir une nouvelle position ou une nouvelle vitesse avec les mesures issues des n-1 satellites restants.

Mais la détermination de ce satellite à exclure demande des calculs nombreux et longs. Ces calculs font intervenir des calculs matriciels à n dimensions, et des inversions de matrices dans ces calculs. Ils doivent être répétés plusieurs fois si plusieurs satellites doivent être éliminés. Pourtant, le récepteur doit fonctionner en temps réel et fournir régulièrement, par exemple toutes les secondes ou plus souvent encore, une nouvelle position et une nouvelle vitesse. Il en résulte que pour parvenir à vérifier l'intégrité de position ou de vitesse et éliminer les satellites défectueux, il faudrait une puissance et une rapidité de calcul beaucoup trop importante, entraînant un coût élevé du récepteur.

La présente invention a pour but de proposer un récepteur comportant des moyens mieux adaptés pour fournir rapidement des résultats de mesure éliminant le ou les satellites défectueux.

On propose donc selon l'invention un récepteur de positionnement par satellites tel que défini dans la revendication 1.

Ainsi, au lieu d'effectuer des calculs itératifs donnant le vecteur X puis, après détection d'une divergence excessive, de refaire des calculs itératifs excluant le satellite défectueux, on s'est aperçu qu'il était possible d'effectuer simplement une étape d'itération supplémentaire, avec une formule de calcul légèrement différente, pour aboutir au résultat recherché.

Plus précisément, si on appelle :

$Z_j$ la composante de rang j du vecteur de mesure
$X_j$ l'estimation du vecteur de mesure à l'étape j de l'itération,
$P_j$ une matrice de 4x4 coefficients à l'étape j,
$K_j$ un vecteur de gain 4x1 à l'étape j,
$\sigma_j$ la composante de bruit estimé pour la mesure sur l'axe j,
H la matrice nx4 des cosinus directeurs des n satellites, $(H)^{<j>}$ la $j^{\text{ième}}$ ligne de cette matrice, et $(H)^{<j>T}$ la transposée de cette $j^{\text{ième}}$ ligne,

la formule d'itération est la suivante :

$$K_j = P_{j-1}.(H)^{<j>T}.[(\sigma_j^2) + (H)^{<j>}.P_{j-1}.(H)^{<j>}T]^{-1}$$

$$P_j = P_{j-1} - K_j.(H)^{<j>}.P_{j-1}$$

$$X_j = X_{j-1} + K_j.[Z_j - (H)^{<j>}.X_{j-1}]$$

et la (n+1)ième étape de l'itération est obtenue en calculant le gain par la formule :

$$K_{n+1} = P_n.(H)^{<m>T}.[-\sigma_m^2 + (H)^{<m>}.P_n.(H)^{<m>T}]^{-1},$$

et le vecteur d'état X' par la formule :

$$X' = X_n + K_{n+1}.[Z_m - (H)^{<m>}.X_n]$$

La mise en oeuvre de ces calculs est beaucoup plus rapide qu'un nouveau calcul itératif complet à n-1 étapes, de sorte qu'après avoir calculé le vecteur X et après avoir recherché quel est l'axe probablement non intègre, on peut rapidement recalculer un vecteur d'état X' ne prenant pas en compte l'axe non intègre.

La détermination de l'axe non intègre, correspondant à un satellite de rang m, se fait de préférence de la manière suivante : on calcule un résiduel $\Delta X = (|Z - H.X|)^2$ pour n configurations différentes à n-1 satellites chacun, chaque configuration correspondant à l'exclusion d'un satellite déterminé, on compare à chaque fois le résiduel à un seuil, et ond identifie, s'il existe, un satellite de rang m tel que le résiduel soit supérieur au seuil pour toutes les configurations où ce satellite est présent et inférieur au seuil pour la configuration où il est absent.

D'autres méthodes d'identification sont possibles, dans lesquelles on évalue plutôt une contribution de chaque satellite à l'erreur de mesure et on détermine le satellite de rang m qui fournit la contribution la plus élevée. La contribution du satellite de rang i est de préférence calculée à partir de la formule $\Delta X_i = Z_i - (H)^{<i>}.$

X mais elle est de préférence divisée par la sensibilité relative $S_{i,i}$ sur l'axe i ; cette sensibilité est le coefficient de rang i, i de la matrice nxn S = I - S = I - H $(H^T - H)^{-1}$ $H^T$ ou I est la matrice identité nxn.

D'autres caractéristiques et avantages de l'invention apparaîtront à la lecture de la description détaillée qui suit et qui est faite en référence aux dessins annexés dans lesquels la figure unique représente la constitution générale d'un récepteur GPS dans lequel la présente invention peut être mis en oeuvre.

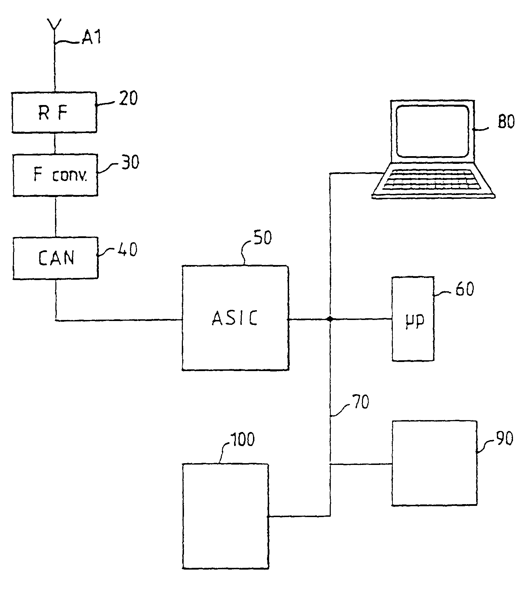

La figure 1 rappelle sommairement le principe général d'un récepteur GPS. Le récepteur comporte une partie radiofréquence, comprenant une antenne A1, un amplificateur radiofréquence 20 et divers circuits de filtrage associés, des circuits de conversion de fréquence 30, et un convertisseur analogique-numérique 40. Le convertisseur permet de fournir des signaux numériques à relativement basse fréquence destinés à être traités dans un circuit de traitement de signal numérique 50. Ce circuit est contrôlé par un microprocesseur 60 et des logiciels de calcul et de contrôle associés.

Le microprocesseur 60 a deux fonctions :

- d'une part, il élabore des données numériques utilisées par le circuit de traitement de signal numérique 50, à partir de données numériques fournies par ce circuit; en particulier, il effectue des calculs numériques nécessaires aux boucles d'asservissement numérique présentes dans le circuit de traitement numérique 50;
- et d'autre part il fournit des résultats définitifs de calcul de position, de temps, et de vitesse à l'utilisateur, c'est-à-dire soit sur un écran d'affichage numérique soit sur un bus numérique vers d'autres appareils qui ont besoin des résultats.

On pourrait évidemment avoir deux processeurs séparés pour effectuer ces deux fonctions. Dans la réalisation avec un seul microprocesseur 60, on a représenté un bus d'échanges 70 entre le microprocesseur 60, le circuit de traitement 50, un périphérique d'entrée/sortie 80, les mémoires de travail 90, et les mémoires de programmes 100 qui contiennent les programmes nécessaires au fonctionnement du microprocesseur.

Très sommairement, le circuit de traitement de signal numérique comporte soit un seul canal de traitement, les informations issues des divers satellites étant traitées de manière multiplexée, soit de préférence plusieurs canaux travaillant en parallèle chacun sur un satellite déterminé.

Chaque canal comporte une double boucle d'asservissement : asservissement de phase de porteuse et asservissement de phase de code.

La boucle de phase de porteuse utilise essentiellement un oscillateur local à contrôle numérique de phase, fournissant une phase numérique périodique (en dent de scie) à une fréquence correspondant à la fréquence de porteuse transposée, en tenant compte de l'effet doppler qui affecte la fréquence de porteuse transmise par un satellite. L'effet doppler est pris en compte du fait même de l'existence des boucles d'asservissement. Le microprocesseur 60 calcule un signal d'erreur de phase de porteuse; ce signal sert à commander l'oscillateur local pour asservir une fréquence porteuse locale sur la fréquence porteuse reçue du satellite.

La boucle d'asservissement de phase de code comporte un générateur de code local, piloté par un oscillateur à contrôle numérique de phase. Elle permet d'asservir les codes locaux sur le code reçu du satellite et de pouvoir ensuite déterminer la position temporelle exacte des codes locaux ainsi asservis. Le code local est corrélé avec le code reçu du satellite; le signal de corrélation est calculé par le microprocesseur et sert à asservir la boucle pour amener le code local en synchronisme avec le code reçu du satellite.

Les deux boucles d'asservissement, de code et de porteuse prennent en compte le décalage de fréquence doppler sur la fréquence porteuse et sur le code, résultant du déplacement relatif de l'avion et du satellite détecté. Ce décalage doppler est mesurable dans les boucles.

Les calculs de temps et de position GPS sont effectués à partir de l'état des boucles d'asservissement à un instant de mesure déterminé. A cet instant, on lit l'état exact de la phase des deux oscillateurs à contrôle numérique de phase.

Les boucles d'asservissement prévues dans le récepteur agissent pour caler une fréquence locale sur la fréquence porteuse reçue des satellites. Le décalage entre cette fréquence locale et la fréquence stable et connue émise par les satellites donne une indication de décalage doppler donc de différence entre la vitesse du satellite et la vitesse du récepteur selon l'axe reliant le satellite au récepteur. Comme on le verra plus loin, cette indication doppler doit être corrigée de l'erreur de fréquence d'horloge locale du récepteur, erreur qui peut être mesurée par la dérive temporelle de l'horloge locale par rapport au temps GPS déterminé à plusieurs instants successifs.

Le récepteur calcule donc, pour les n différents satellites observés à un instant donné (n supérieur ou égal à 4), sa position relative par rapport à ces satellites. Il en déduit les directions des axes d'observation de chacun des satellites. Et, par un changement d'axes, il en déduit sa position dans un repère terrestre à quatre dimensions (longitude, latitude, altitude, temps).

De la même façon, le récepteur peut calculer sa vitesse selon les n axes satellites et en déduire sa vitesse dans un repère terrestre à quatre dimensions.

Mais, étant donné que quatre satellites seulement sont nécessaires pour déterminer une position ou une vitesse, alors que la mesure est faite sur n satellites avec n>4, il y a redondance d'information. Si les mesures sont sujettes à des erreurs (bruit de mesure sur chaque axe), la coïncidence entre les différentes mesures ne sera pas parfaite. Cela signifie qu'en choisissant un groupe de 4 satellites parmi les n, le changement de coordonnées aboutit à une position et un vecteur vitesse dans le repère terrestre, mais en choisissant un autre groupe de 4 satellites, on aboutirait à une position légèrement différente et un vecteur vitesse légèrement différent.

Le récepteur calcule donc, par exemple par une méthode des moindres carrés, la position et la vitesse la plus probable résultant de l'utilisation des n satellites. On reviendra plus en détail sur cette méthode. Et le récepteur peut également calculer une estimation de l'erreur résultant de l'utilisation des n satellites, c'est-à-dire une estimation de la divergence entre les n mesures. Il peut déterminer si cette divergence dépasse un seuil acceptable, et en conclure que la mesure doit être rejetée à cause de ce dépassement. Enfin, il peut calculer une estimation de l'erreur de mesure provenant d'un satellite particulier, faire un classement des erreurs engendrées par les différents satellites, déterminer quel est le satellite qui risque d'être la cause d'une divergence inacceptable, éliminer les mesures fournies à partir de ce satellite, et fournir une position ou une vitesse corrigée à partir des n-1 satellites restants. Le récepteur peut aussi recommencer une élimination de satellite si l'erreur avec n-1 satellites continue à dépasser un seuil acceptable.

L'invention a pour but de proposer une solution rapide pour fournir une position ou une vitesse corrigée à partir de n-1 satellites lorsqu'une divergence inacceptable a été détectée et lorsque le satellite donnant probablement lieu à cette divergence a été identifié. On va expliquer en détail cette solution.

Dans ce qui suit, on va supposer pour simplifier que la mesure recherchée est une mesure de position du récepteur, mais le principe est transposable sans difficulté s'il s'agit d'une mesure de vitesse du récepteur.

On appelle Z le vecteur à n dimensions représentant les n mesures de position relatives faites le long des n axes directeurs reliant le récepteur aux satellites. Dans ce vecteur, la composante $Z_j$ est la mesure de position sur l'axe directeur correspondant au $j^{ième}$ satellite.

H est la matrice nx4 des cosinus directeurs, c'est-à-dire une matrice de n lignes de quatre coefficients $C_{i,x}$, $C_{i,y}$, $C_{i,z}$, 1 (i = 1 à n), où $C_{i,x}$, $C_{i,y}$, et $C_{i,z}$ représentent les cosinus des angles entre le $i^{ième}$ axe directeur et les axes Ox, Oy, Oz (longitude, latitude, altitude) du repère terrestre (O étant la position du récepteur). La matrice $H^T$ est la matrice transposée de H. Le vecteur $(H)^{<j>}$ représente la $j^{ième}$ ligne de la matrice H, et le vecteur $(H)^{<j>T}$ est la transposée de cette $j^{ième}$ ligne.

La position absolue du récepteur dans le repère terrestre peut s'exprimer sous forme d'un vecteur X, qu'on appellera vecteur d'état, par opposition au vecteur de mesure Z. Le vecteur Z est un vecteur à n dimensions; le vecteur X est un vecteur à 4 dimensions représentant la position cherchée, appelée aussi "position résolue".

S'il n'y avait pas d'erreur de mesure, c'est-à-dire s'il y avait coïncidence de la valeur du vecteur X calculé en prenant n'importe quel groupe de 4 satellites parmi les n, on aurait la relation suivante entre le vecteur X et le vecteur Z :

$$Z = H.X \qquad (1)$$

Cela signifie que les mesures de vitesse du récepteur selon les axes directeurs (considérés comme repère fixe) peuvent être projetées dans le repère terrestre à quatre dimensions pour avoir un vecteur vitesse à quatre dimensions uniquement.

En réalité, il y a un écart entre Z et H.X et l'intégrité de la mesure de position par plus de quatre satellites peut être représentée par une mesure de cet écart entre Z et H.X.

Si on se fixe un critère d'optimisation pour trouver le vecteur X qui est le plus représentatif de la position recherchée dans le repère terrestre, on peut calculer X à partir de la formule Z = H.X. Ce critère est de préférence un critère de minimisation de la somme des distances entre la position trouvée (X), projetée sur les axes directeurs, et la position mesurée (Zj) le long de ces axes.

Mathématiquement, si on adopte ce critère, qui revient à minimiser la norme du vecteur Z - H.X, on peut montrer que l'équation Z = H.X. admet la solution suivante :

$$X = (H^T.H)^{-1}.H^T.Z \qquad (2)$$

Et la mesure de l'erreur de mesure globale peut être évaluée quantitativement à partir de la valeur suivante ΔV, qu'on appellera "résiduel de l'erreur de calcul"

$$\Delta X = (|Z - H.X|)^2 \qquad (3)$$

c'est-à-dire que le résiduel ΔX est la valeur normée du vecteur différence entre le vecteur mesuré Z et le vecteur H.X.

Ce résiduel ΔX est d'autant plus grand que les mesures effectuées par les n satellites coïncident moins bien. Il est calculé par le processeur à partir de la formule (3), et, s'il dépasse un seuil déterminé, une indication de mesure inacceptable peut être transmise. Dans le cas présent, si le seuil est dépassé, on déclenche en outre un processus de recalcul de position excluant le ou les satellites qui induisent probablement une erreur excessive.

Pour parvenir à ce résultat, le processeur calcule le résiduel pour n ensembles de n-1 satellites, c'est-à-dire qu'il supprime à chaque fois un satellite déterminé dans la constellation avant de calculer le résiduel.

Les contributions de chaque satellite sont les valeurs $\Delta X_i$ pour le satellite de rang i, avec :

$$\Delta X_i = Z_i - (H)^{<i>}.X \qquad (4)$$

Elles sont calculées à partir du vecteur X préalablement déterminé.

Si les résiduels calculés sont tous inférieurs à un seuil prédéterminé, on considère qu'il n'y a pas de problème et que la mesure est bonne avec n satellites. Si plusieurs résiduels sont inférieurs au seuil, on considère qu'il y a une erreur mais on ne sait pas déterminer d'où elle vient, et la mesure n'est pas utilisée (on attend la mesure suivante pour prendre une décision). Si enfin tous les résiduels sauf un sont supérieurs au seuil, on sait quel est le satellite qui introduit une erreur, puisque l'erreur disparaît lorsqu'on l'élimine, et on cherche donc à l'éliminer pour calculer la position X.

L'élimination consiste à recalculer le vecteur X en n'utilisant plus que n-1 satellites (satellite m exclu) alors qu'il a été calculé auparavant avec n satellites.

Et, pour accélérer le recalcul d'un vecteur X' destiné à remplacer le vecteur X précédemment calculé, on propose selon l'invention que :

1. le premier calcul du vecteur X soit fait par une méthode itérative et non une méthode d'inversion de matrices (qui résulte de l'équation (2)); et
2. le calcul du vecteur X' s'effectue à partir du calcul itératif de X en rajoutant une étape d'itération supplémentaire utilisant les mesures du satellite de rang m à éliminer, et modifiée par rapport aux autres étapes d'une manière telle que le vecteur X' résultant de ce cette étape supplémentaire d'itération soit identique au vecteur qui aurait été obtenu par un calcul itératif ne prenant pas en compte le satellite de rang m.

Plus précisément, lorsque l'on recherche le vecteur X satisfaisant à l'équation (1) avec une optimisation par la méthode des moindres carrés (minimisation des distances comme expliqué ci-dessus), on peut trouver X par la méthode d'itération suivante comportant trois calculs à n'importe quelle étape d'itération de rang j, où j varie de 1 à n, c'est-à-dire où j représente un axe directeur particulier :

A. calcul d'un gain $K_j$, avec :

$$K_j = P_{j-1}.(H)^{<j>T}.[(\sigma_j^2) + (H)^{<j>}.P_{j-1}.(H)^{<j>T}]^{-1}$$

$P_j$ est une matrice de coefficients calculés à l'étape j; $P_{j-1}$ est donc cette matrice à l'étape précédente. $\sigma_j^2$ est une composante de bruit estimé pour la mesure sur l'axe j. Ce bruit est une donnée connue a priori, ou estimée a priori, résultant principalement

- de l'erreur de "disponibilité sélective" (en anglais "selective availability" SA) qui est une imprécision d'horloge affectant les satellites, imprécision dont l'amplitude est donnée par les satellites eux-mêmes dans le message de navigation,
- des erreurs de propagation atmosphériques,
- du bruit de corrélation, estimé dans le récepteur par un filtre qui fournit directement ce bruit.

La matrice $P_0$ est initialement une matrice diagonale avec des coefficients élevés (par exemple $10^5$).

B. calcul de la matrice Pj avec :

$$P_j = P_{j-1} - K_j.(H)^{<j>}.P_{j-1}$$

C. calcul d'une estimation de position $X_j$, avec :

$$X_j = X_{j-1} + K_{j-1}.[Z_j - (H)^{<j>}.X_{j-1}]$$

où $X_j$ est le vecteur d'état en quatre dimensions, estimé à l'étape j de l'itération, et Zj est la composante de rang j du vecteur de mesure de position, c'est-à-dire la mesure sur l'axe directeur j.

Ayant obtenu une estimation finale $X = X_n$ du vecteur d'état à la fin de l'itération, on propose de calculer le vecteur d'état X' (sur n-1 satellites, axe m exclu) par une étape d'itération supplémentaire, mais légèrement modifiée :

$$K_{n+1} = P_n.(H)^{<m>T}.[-(\sigma_m)^2 + (H)^{<m>}.P_n(H)^{<m>T}]^{-1}$$

$$\text{et } X' = X_n + K_{n+1}.[Z_m - (H)^{<m>}.Xn]$$

Ce dernier calcul fournit une valeur de vecteur d'état X' (position ou vitesse dans un repère terrestre à quatre dimensions) représentant la contribution des satellites autres que le satellite exclu de rang m.

A ce stade on peut évidemment vérifier qu'il n'y a plus divergence de mesures (calcul du résiduel $\Delta V$).

Ces calculs sont effectués à chaque nouvelle mesure de position ou de vitesse, et si le satellite de rang m n'induit plus une divergence de mesure, il est réintégré dans le calcul de position ou vitesse. Le critère de décision est le fait que l'élimination du satellite de rang m provoque un retour du résiduel au dessous du seuil alors que le résiduel est supérieur au seuil chaque fois que le satellite de rang m est présent.

**Revendications**

1. Récepteur de positionnement par satellites, comprenant des moyens de mesure utilisant simultanément n satellites de rang j = 1 à n, et fournissant un vecteur de mesure Z à n dimensions représentant des mesures selon les n axes directeurs reliant le récepteur aux n satellites, des moyens pour calculer un vecteur d'état X à quatre dimensions à partir du vecteur de mesure Z, des moyens pour déterminer le degré de divergence entre les n mesures, des moyens pour identifier un satellite de rang m qui entraîne le plus probablement une divergence excessive, et des moyens pour déterminer un nouveau vecteur d'état X' à partir d'un vecteur Z' de n-1 mesures excluant la mesure provenant du satellite divergent de rang m, caractérisé en ce que les moyens de calcul du vecteur X comportent des moyens pour exécuter un processus d'itération à n étapes, la $j^{ième}$ étape faisant intervenir le $j^{ième}$ satellite, et en ce que les moyens de détermination du vecteur X' comportent des moyens pour exécuter une (n+1)ième étape d'itération, utilisant les mesures du satellite divergent de rang m, cette dernière étape étant différente des précédentes et la différence étant telle que le résultat de calcul après cette (n+1)ième étape soit identique à celui que donnerait une itération à n-1 étapes excluant le satellite divergent de rang m.

2. Récepteur selon la revendication 1, caractérisé en ce que, si on appelle :

   Zj la composante de rang j du vecteur de mesure
   Xj l'estimation du vecteur de mesure à l'étape j de l'itération,
   $P_j$ une matrice de coefficients à l'étape j,
   $K_j$ un vecteur de gain 4x1 à l'étape j,
   $\sigma_j$ la composante de bruit estimé pour la mesure sur l'axe j,
   H la matrice nx4 des cosinus directeurs des n satellites, $(H)^{<j>}$ la $j^{ième}$ ligne de cette matrice, et $(H)^{<j>T}$ la transposée de cette $j^{ième}$ ligne,

   la formule d'itération est la suivante :

   $$K_j = P_{j-1}.(H)^{<j>T}.[(\sigma_j^2) + (H)^{<j>}.P_{j-1}.(H)^{<j>T}]^{-1}$$

   $$P_j = P_{j-1} - K_j.(H)^{<j>}.P_{j-1}$$

   $$X_j = X_{j-1} + K_j.[Z_j - (H)^{<j>}.X_{j-1}]$$

   et la (n+1)ième étape de l'itération est obtenue en calculant d'une part le vecteur de gain par la formule :

   $$K_{n+1} = P_n.(H)^{<m>T}.[-\sigma_m^2 + H^{<m>}.P_n.(H)^{<m>T}]^{-1},$$

   et d'autre part le vecteur d'état X' par la formule :

   $$X' = X_n + K_{n+1}.[Z_m - (H)^{<m>}.X_n]$$

3. Récepteur selon la revendication 2, caractérisé en ce que les moyens pour identifier le satellite de rang m comprennent des moyens de calcul d'un résiduel $\Delta X = (| Z - H.X |)^2$ pour n configurations différentes à n-1 satellites chacun, chaque configuration correspondant à l'exclusion d'un satellite déterminé, des moyens pour comparer à chaque fois le résiduel à un seuil, des moyens pour identifier un satellite de rang m tel que le résiduel soit supérieur au seuil pour toutes les configurations où ce satellite est présent et inférieur au seuil pour la configuration où il est absent.

4. Récepteur selon l'une des revendications 1 à 3, caractérisé en ce que le vecteur de mesure est un vecteur de position.

5. Récepteur selon l'une des revendications 1 à 3, caractérisé en ce que le vecteur de mesure est un vecteur de vitesse.

**Patentansprüche**

1. Empfänger für Positionssignale von Satelliten, mit Meßmitteln, die gemeinsam n Satelliten des Rangs j (1≤j≤n) verwenden und einen n-dimensionalen Meßvektor Z liefern, der Meßwerte gemäß den n Richtachsen zwischen dem Empfänger und den n Satelliten repräsentiert, mit Mitteln zur Berechnung eines vierdimensionalen Zustandsvektors X ausgehend vom Meßvektor Z, mit Mitteln zur Bestimmung des Grades der Divergenz zwischen den n Messungen, mit Mitteln zur Identifizierung eines Satelliten des Rangs m, der höchstwahrscheinlich für eine unzulässig große Divergenz ursächlich ist, und mit Mitteln zur Bestimmung eines neuen Zustandsvektors X' ausgehend von einem Vektor Z' unter Berücksichtigung von n-1 Meßwerten und unter Ausschluß des Meßwerts des divergierenden Satelliten des Rangs m, dadurch gekennzeichnet, daß die Mittel zur Berechnung des Vektors X Mittel zur Durchführung eines Iterationsprozesses in n Schritten enthalten, wobei der j-te Schritt den j-ten Satelliten berücksichtigt, und daß die Mittel zur Bestimmung des Vektors X' Mittel enthalten, um einen (n+1)ten Iterationsschritt unter Verwendung der Meßwerte des divergierenden Satelliten des Rangs m enthalten, wobei dieser letzte Schritt sich von den vorhergehenden unterscheidet und der Unterschied so ist, daß das Ergebnis der Berechnung nach diesem (n+1)-ten Schritt dem gleicht, den eine Iteration mit (n-1) Schritten unter Ausschluß des divergierenden Satelliten ergeben würde.

2. Empfänger nach Anspruch 1, dadurch gekennzeichnet, daß die iterative Formel folgende Form hat:

$$K_j = P_{j-1} \cdot (H)^{<j>T} \cdot [(\sigma_j^2) + (H)^{<j>} \cdot P_{j-1} \cdot (H)^{<j>T}]^{-1}$$

$$P_j = P_{j-1} - K_j \cdot (H)^{<j>} \cdot P_{j-1}$$

$$X_j = X_{j-1} + K_j \cdot [Z_j - (H)^{<j>} \cdot X_{j-1}]$$

während der (n+1)-te Iterationsschritt erhalten wird, indem der Gewinngrad nach folgender Formel

$$K_{n+1} = P_n \cdot (H)^{<m>T} \cdot [-(\sigma_m)^2 + (H)^{<m>} \cdot P_n \cdot (H)^{<m>T}]^{-1}$$

und der Zustandsvektor X' nach folgender Formel berechnet wird: $X' = X_n + K_{n+1} \cdot [Z_m - (H)^{<m>} \cdot X_n]$ wobei bedeutet:

| | |
|---|---|
| $Z_j$ | die Komponente des Rangs j des Meßvektors, |
| $X_j$ | Schätzwert des Meßvektors beim i-ten Iterationsschritt |
| $P_j$ | Matrix mit 4*4 Koeffizienten beim Schritt j |
| $K_j$ | Gewinnvektor 4*1 beim Schritt j |
| $\sigma_j$ | geschätzte Rauschkomponente für die Messung auf der Achse j |
| H | Matrix n*4 der Kosinus-Richtwerte der n Satelliten |
| $(H)^{<j>}$ | Zeile j dieser Matrix |
| $(H)^{<j>T}$ | Transponierte dieser Zeile j. |

3. Empfänger nach Anspruch 2, dadurch gekennzeichnet, daß die Mittel zur Identifizierung des Satelliten des Rangs m Mittel zur Berechnung eines Restwerts $\Delta X = (|Z - H \cdot X|)^2$ für n unterschiedliche Konfigurationen mit je n-1 Satelliten, wobei jede Konfiguration dem Ausschluß eines anderen Satelliten entspricht, weiter Mittel zum Vergleich des jeweiligen Restwerts mit einer Schwelle und Mittel zur Identifizierung eines Satelliten des Rangs m enthalten derart, daß der Restwert für alle Konfigurationen, an denen dieser Satellit beteiligt ist, überschritten wird, während er für die Konfiguration unterschritten wird, in der er fehlt.

4. Empfänger nach einem der Ansprüche 1 bis 3, dadurch gekennzeichnet, daß der Meßvektor ein Positionsvektor ist.

5. Empfänger nach einem der Ansprüche 1 bis 3, dadurch gekennzeichnet, daß der Meßvektor ein Geschwindigkeitsvektor ist.

**Claims**

1. Satellite positioning receiver, comprising measurement means which simultaneously use n satellites of rank j = 1 to n, and deliver an n-dimensional measurement vector Z representing measurements along the n director axes linking the receiver to the n satellites, means for calculating a four-dimensional state vector X on the basis of the measurement vector Z, means for determining the degree of divergence between the n measurements, means for identifying a satellite of rank m which is the most probable cause of excessive divergence, and means for determining a new state vector X' on the basis of a vector Z' of n-1 measurements excluding the measurement coming from the divergent satellite of rank m, characterized in that the means for calculating the vector X include means for executing an iteration process with n steps, the jth step involving the jth satellite, and in that the means for determining the vector X' include means for executing an (n+1)th iteration step, using the measurements from the divergent satellite of rank m, this last step being different from the previous ones and the difference being such that the calculation result after this (n+1)th step is identical to that which an iteration with n-1 steps excluding the divergent satellite of rank m would give.

2. Receiver according to Claim 1, characterized in that, if:

$Z_j$ denotes the component of rank j of the measurement vector,
$X_j$ denotes the estimate of the measurement vector at step j of the iteration,
$P_j$ denotes a matrix of coefficients at step j,
$K_j$ denotes a 4x1 gain vector at step j,
$S_j$ denotes the component of estimated noise for the measurement on the axis j,
H denotes the nx4 matrix of the director cosines of the n satellites, $(H)^{<j>}$ denotes the jth row of this matrix, and $(H)^{<j>T}$ denotes the transpose of this jth row,

the iteration formula is as follows:

$$K_j = P_{j-1} \cdot (H)^{<j>T} \cdot [(s_j^2) + (H)^{<j>} \cdot P_{j-1} \cdot (H)^{<j>T}]^{-1}$$

$$P_j = P^{j-1} - K_j \cdot (H)^{<j>} \cdot P_{j-1}$$

$$X_j = X_{j-1} + K_j \cdot [Z_j - (H)^{<j>} \cdot X_{j-1}]$$

and the $(n+1)^{th}$ step of the iteration is obtained by calculating, on the one hand, the gain vector by the formula:

$$K_{n+1} = P_n \cdot (H)^{<m>T} \cdot [-s_m^2 + H^{<m>} \cdot P_n \cdot (H)^{<m>T}]^{-1}$$

and, on the other hand, the state vector X' by the formula:

$$X' = X_n + K_{n+1} \cdot [Z_m - (H)^{<m>} \cdot X_n]$$

3. Receiver according to Claim 2, characterized in that the means for identifying the satellite of rank m comprise means for calculating a residue $DX = (|Z - H.X|)^2$ for n different configurations with n-1 satellites each, each configuration corresponding to the exclusion of a specific satellite, means for each time comparing the residue with a threshold, means for identifying a satellite of rank m such that the residue is above the threshold for all the configurations in which this satellite is present and below the threshold for the configuration in which it is absent.

4. Receiver according to one of Claims 1 to 3, characterized in that the measurement vector is a position vector.

5. Receiver according to one of Claims 1 to 3, characterized in that the measurement vector is a velocity vector.